# EUROPEAN PATENT APPLICATION

(11) **EP 2 557 565 A1**
(43) Date of publication of application: **13.02.2013**
(21) Application number: 12162406.8
(22) Date of filing: 30.03.2012
(51) Int. Cl.: G10L 15/26

(54) **Voice recognition method and apparatus**

(30) Priority: 08.08.2011 KR 20110078703
(71) Applicant: Samsung Electronics Co., Ltd., Suwon-si, Gyeonggi-do, 443-742 (KR)
(72) Inventor: Bak, Eun-sang, Gyeonggi-do (KR)
(74) Representative: Bruce, Alexander Richard Henry

(57) **Abstract**

A voice recognition apparatus, a voice recognition server, a voice recognition system, and a voice recognition method, in which a general-purpose voice recognition engine may accurately recognize a limited number of words used in a specific area

## Description

Embodiments of the present invention relate to a voice recognition apparatus, a voice recognition server, a voice recognition system, and a voice recognition method, and more particularly, to a voice recognition apparatus, a voice recognition server, a voice recognition system and a voice recognition method which accurately recognizes a limited number of words used in a particular area with a general-purpose voice recognition engine.

Voice recognition technology is widely used in household appliances, such as digital TVs, as well as in PCs and mobile communication devices. In particular, mobile communication devices have adopted a voice recognition technology based on a server and provide a searching function, such as web search and a function for inputting a SMS function using voice. The server-based voice recognition engine recognizes not only language used in a so-called particular area, but also various words in a non-particular area. A general-purpose voice recognition engine, which is not limited in recognizable words, may be provided within PCs, mobile communication devices or digital TVs.

The foregoing voice recognition engine provides a lower recognition rate, or is less successful in initially recognizing words, than a specialized voice recognition engine if the former is limited in a specific area and has a limited number of recognizable words.

Accordingly, one or more exemplary embodiments provide a voice recognition apparatus, a voice recognition server, a voice recognition system and a voice recognition method which accurately recognizes a limited number of words used in a specific area with a general-purpose voice recognition engine that is not limited in recognizable words.

According to an aspect of an exemplary embodiment, there is provided a voice recognition apparatus including: a voice input unit which receives a voice input from a user; an image processor which processes an image; a display unit which displays thereon an image processing result; a controller which transmits the data of the voice input and voice recognizable information to a voice recognition engine, and receives from the voice recognition engine a recognition result that indicates whether the data of the voice input corresponds to the voice recognizable information.

The voice recognizable information may include text information.

The voice recognizable information may include a plurality of words subject to voice recognition.

The voice recognizable information may include an image or a name of an image.

The voice recognizable information may include link information or a menu item of a web page.

The voice recognition information may include a text having at least one word of a web page or a menu displayed when the voice input is received.

The voice recognition apparatus may include one of a mobile terminal, a computer, and a display apparatus.

The voice recognition engine may operate in a device mounted in the voice recognition apparatus.

The voice recognition engine may operate in a device mounted in a voice recognition server external to the voice recognition apparatus.

Another aspect may be achieved by providing a voice recognition apparatus including: a voice input unit which receives a voice input from a user; an image processor which processes an image; a display unit which displays the processed image; a communication unit which communicates with a voice recognition server; and a controller which transmits data of the voice input and voice recognizable information to the voice recognition server, and receives from the voice recognition server a recognition result that indicates whether the data of the voice input corresponds to the voice recognizable information.

The voice recognition apparatus may further include a storage unit which stores therein the voice recognizable information.

According to an aspect of an exemplary embodiment, there is provided a voice recognition server including: a communication unit which receives from a voice recognition apparatus voice input data and voice recognizable information; a voice recognition unit which performs a voice recognition function that determines whether the voice input data corresponds to the voice recognizable information; and a controller which controls the voice recognition unit to perform the voice recognition function, and transmits to the voice recognition apparatus a recognition result that indicates whether the voice input data corresponds to the voice recognizable information.

The voice recognition server may further include a storage unit which stores therein the voice recognizable information.

The voice recognition server may further include a recognition adjuster which adjusts the recognition result to most similar information among the voice recognizable information if the recognition result is similar to the voice recognizable information.

The voice recognition unit may include a server-based general-purpose voice recognition engine.

The voice recognizable information may include text information.

The voice recognizable information may include a plurality of words subject to voice recognition.

The voice recognizable information may include an image or a name of an image.

The voice recognizable information may include link information or a menu item of a web page.

According to an aspect of an exemplary embodiment, there is provided a voice recognition system including: a voice recognition apparatus which transmits voice input data and voice recognizable information to a voice recognition server, and receives from the voice recognition server a recognition result that indicates whether the voice input data corresponds to the voice recognizable information; and a voice recognition server which receives the voice input data and the voice recognizable information from the voice recognition apparatus, determines whether the voice input data corresponds to the voice recognizable information, and transmits the recognition result to the voice recognition apparatus.

The recognition result may be adjusted to most similar information among the voice recognizable information if the recognition result is similar to the voice recognizable information.

According to an aspect of an exemplary embodiment, there is provided a voice recognition method including: receiving a voice input by a voice recognition apparatus; transmitting data of the voice input and voice recognizable information to a voice recognition server; determining whether the data of the voice input corresponds to the voice recognizable information; and transmitting to the voice recognition apparatus a voice recognition result that indicates whether the data of the voice input corresponds to the voice recognizable information.

The voice recognizable information may include text information.

The voice recognizable information may include a plurality of words subject to voice recognition.

The voice recognizable information may include an image or a name of an image.

The voice recognizable information may include link information or a menu item of a web page.

The voice recognizable information may include a text having at least one word of a web page or a menu displayed when the voice input is received.

The determining may include adjusting the recognition result to most similar information among the voice recognizable information if the recognition result is similar to the voice recognizable information.

The above and/or other aspects will become apparent and more readily appreciated from the following description of the exemplary embodiments, taken in conjunction with the accompanying drawings, in which:
FIG. 1 is a block diagram of a voice recognition apparatus according to an exemplary embodiment;
FIG. 2 is a block diagram of a voice recognition system including a voice recognition apparatus and a voice recognition server according to another exemplary embodiment;
FIG. 3 illustrates an example of a web page which displays voice recognizable information according to the exemplary embodiment;
FIG. 4 is a flowchart of a voice recognition method according to the exemplary embodiment; and
FIG. 5 is a flowchart of a voice recognition method according to another exemplary embodiment.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

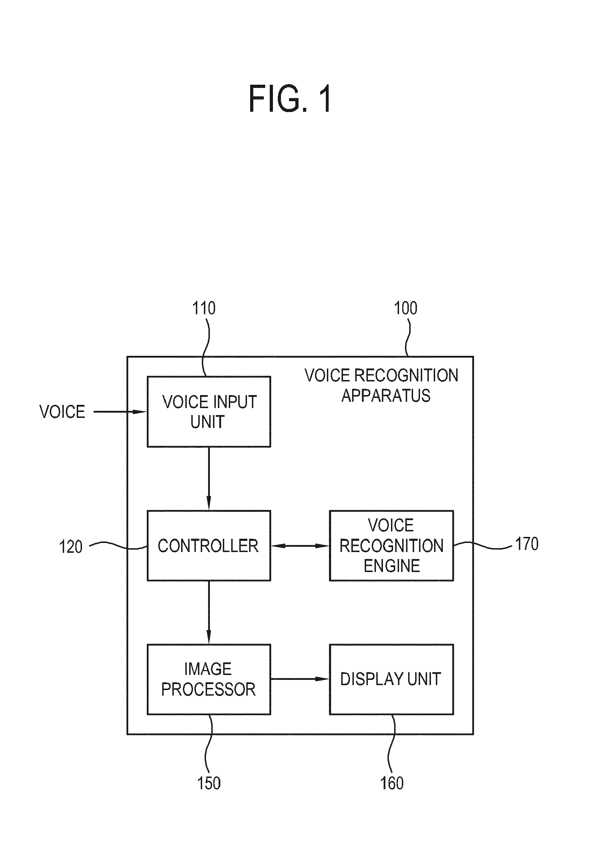

FIG. 1 is a block diagram of a voice recognition apparatus according to an exemplary embodiment.

Referring to FIG. 1, a voice recognition apparatus 100 includes a voice input unit 110, a controller 120, an image processor 150, a display unit 160 and a voice recognition engine 170.

The voice recognition apparatus 100 may include a mobile terminal, a computer, or a display apparatus. The voice input unit 110 receives a voice input from a user, performs analog to digital (A/D) conversion to convert the input voice into a digital format.

The image processor 150 processes a signal input by the controller 120 to display an image.

The display unit 160 displays thereon an image processing result. More specifically, the display unit 160 displays thereon information that may be pronounced by a user as voice. The display unit 160 displays thereon information corresponding to a recognition result of the voice input.

The voice recognition engine 170 may include software that is executed by a separate device in the voice recognition apparatus 100. For example, the voice recognition engine 170 may be mounted in a chip provided within the voice recognition apparatus 100. Instead of being executed by the separate device, the voice recognition engine 170 may include software that is stored in a flash memory and executed by a main memory such as the controller 120 upon turn-on and operation of the voice recognition apparatus 100. FIG. 1 illustrates the voice recognition engine 170 included in the voice recognition apparatus 100, but the voice recognition engine 170 is not limited thereto. Alternatively, the voice recognition engine 170 may be provided external of the voice recognition apparatus 100. For example, the voice recognition engine may be provided in an external voice recognition server connected through the Internet or provided in an external device connected in a local network.

The controller 120 transmits to the voice recognition engine 170 voice input data and voice recognizable information input by the voice input unit 110, and receives a recognition result of the voice input from the voice recognition engine 170. The voice input data refer to voice information pronounced by a user. The voice recognizable information may include text information provided in a mobile terminal, a computer, or a display apparatus, and more specifically, a plurality of words that may be recognized as voice. For example, when a user watches a movie or news from a display apparatus, that user may pronounce "volume up", "volume down" or "speak up" or "voice down" to adjust sound of the movie or news. A user may pronounce "channel up" or "channel down" to change a channel or pronounce "power on" or "power off" to control power. As above, a group of control commands which are used to control a display apparatus and are stored in the display apparatus in advance is voice recognizable information.

If a user pronounces "speak up", the controller 120 transmits voice input data "speak up" and voice recognizable information such as "volume up", "volume down", "speak up", "voice down", "channel up", "channel down", "power on", and "power off" that are stored in the display apparatus in advance to the voice recognition engine 170. Then, the voice recognition engine 170 extracts a voice character vector from the voice input data "speak up", and compares the vector with several commands corresponding to voice recognizable information. If it is determined that there is the same voice recognizable information as "speak up", control information corresponding to "speak up" is transmitted to the controller 120, and the controller 120 adjusts the sound of the display apparatus. The control information corresponds to a command for each function between the controller 120 and the voice recognition engine 170.

If a user pronounces similarly to "voice down", the controller 120 transmits voice input data similar to "voice down" and voice recognizable information such as "volume up", "volume down", "speak up", "voice down", "channel up", "channel down", "power on", and "power off" to the voice recognition engine 170. The voice recognition engine 170 extracts a voice character vector from the voice input data similar to "voice down", and compares the vector with several commands corresponding to the voice recognizable information. The voice recognition engine 170 may determine that there is voice recognizable information similar to, but not identical to, "voice down". If the voice input data are very similar to, even if not identical to, the voice recognizable data, the voice recognition engine 170 may adjust the voice recognition result and recognize the voice input data as "voice down". If the voice recognition engine 170 transmits control information corresponding to "voice down" to the controller 120, the controller 120 adjusts the sound of the display apparatus.

In the foregoing exemplary embodiment, the voice recognizable information is stored in advance in a mobile terminal, a computer, or a display apparatus, but the storage of the voice recognizable information is not limited thereto. Alternatively, the voice recognizable information may include text information displayed in a screen, such as link information of a web page, text information of a web page, and text information of a menu if the display unit 160 displays a web page of a computer or a menu of the display apparatus when the voice recognition apparatus 100 receives voice input data from a user. The voice recognizable information may include various images and names of images. If a voice input is received and the foregoing information is displayed in a screen, the controller 120 transmits to the voice recognition engine 170 a text including at least one word extracted from the information displayed in the screen together with the received voice input data, and receives a voice recognition result from the voice recognition engine 170 for operation. The above example is the same as the foregoing exemplary embodiment that receives voice input data and voice recognizable information from the voice recognition engine 170 except that such data are not stored in the voice recognition apparatus 100, but are displayed on the display unit 160.

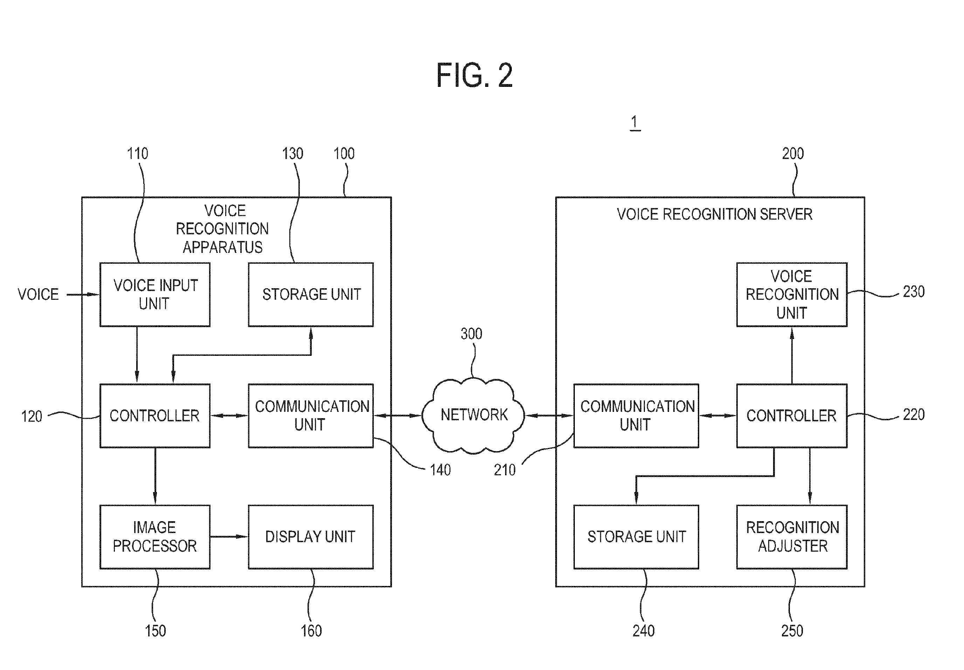

FIG. 2 is a block diagram of a voice recognition system including a voice recognition apparatus and a voice recognition server according to another exemplary embodiment.

Referring to FIG. 2, a voice recognition system 1 includes a voice recognition apparatus 100 and a voice recognition server 200. The voice recognition apparatus 100 includes a voice input unit 110, a controller 120, a storage unit 130, a communication unit 140, an image processor 150, and a display unit 160. The functions of the voice input unit 110, the controller 120, the image processor 150 and the display unit 160 are the same as those described in FIG. 1. The storage unit 130 stores therein voice recognizable information. If a voice input is received, the storage unit 130 may store therein voice recognizable information displayed on the display unit 160. As described with reference to FIG. 1, the storage unit 130 may store therein a control command of the voice recognition apparatus 100 in advance. The communication unit 140 communicates with the voice recognition server 200 in a network 300. The network 300 may be a wired/wireless network.

The controller 120 transmits to the voice recognition server 200 voice input data input by a user and voice recognizable information, and receives a recognition result corresponding to a voice recognition for operation. A detailed description of the voice recognition apparatus 100 is the same as that in FIG. 1, and thus will not be repeated again.

The voice recognition server 200 includes a communication unit 210, a controller 220, a voice recognition unit 230, a storage unit 240, and a recognition adjuster 250. The voice recognition server 200 may include a server-based general-purpose voice recognition engine, which is not limited in the number of recognizing words, instead of an embedded voice recognition engine which is limited in the number of recognizing words.

The communication unit 210 communicates with the voice recognition apparatus 100 in a wired/wireless network 300. A voice recognition engine is mounted in the voice recognition unit 230, which performs a voice recognition function. The storage unit 240 stores therein voice recognizable information transmitted by the voice recognition apparatus 100. The stored voice recognizable information may be referred to when the voice recognition unit 230 performs the voice recognition function.

The controller 220 controls the voice recognition unit 230 to recognize the voice input data transmitted by the voice recognition apparatus 100 with respect to only the voice recognizable information stored in the storage unit 240, and transmits a voice recognition result to the voice recognition apparatus 100. If the voice recognition result is similar to the voice recognizable information stored in the storage unit 240, the recognition adjuster 250 adjusts the voice recognition result to the most similar information among the voice recognizable information.

More specifically, as shown in FIG. 1, if the voice recognition server 200 receives the voice input data having a similar pronunciation to "voice down" from the voice recognition apparatus 100 and the voice recognizable information such as "volume up", "volume down", "speak up", "voice down", "channel up", "channel down", "power on", and "power off", the voice recognition unit 230 recognizes the voice input as a similar pronunciation to "voice down". If the controller 220 determines that there is no identical information but a similar "voice down" is present, it controls the recognition adjuster 250 to adjust the recognition result to "voice down". The voice recognition server 200 transmits control information corresponding to adjusted "voice down" to the voice recognition apparatus 100, and the voice recognition apparatus 100 receives the voice recognition result for operation.

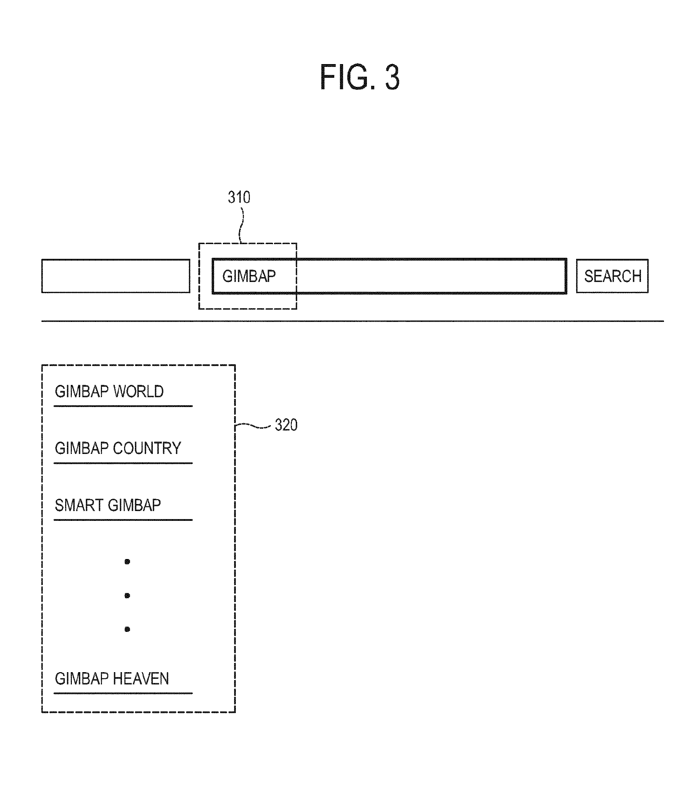

FIG. 3 illustrates an example of a web page displaying voice recognizable information according to an exemplary embodiment.

Referring to FIG. 3, if the voice recognition apparatus 100 includes a computer or a mobile terminal, a web page is displayed on the display unit 160. In FIG. 3, voice recognizable information refers to link information, a menu, or a text of a web page displayed when a voice input is received from a user.

A user searches "gimbap" 310 by using the user's voice or a keyboard from a web page of a computer. Then, information 320 corresponding to a search result is displayed in the web page. Then, a user may select one of information 320 corresponding to a search result by using voice information.

For example, if a user pronounces "smart" to select "smart gimbap" in a third link from above among the information 320 corresponding to the search result, the controller 120 of the computer extracts and, together with the voice input data "smart", transmits to the voice recognition server 200 "gimbap world", "gimbap country", "smart gimbap"...."gimbap heaven" as voice recognizable information displayed in a screen when the voice input is received from a user. The voice recognition server 200 receives voice input data "smart" and voice recognizable information, and recognizes them as "smart". The controller 220 of the voice recognition server 200 compares the voice recognizable information stored in the storage unit 240 and the recognition result, and determines that there is no identical information to "smart" but there is similar information, i.e., "smart gimbap". Then, the controller 220 of the voice recognition server 200 controls the recognition adjuster 250 to adjust the recognition result to "smart gimbap". The voice recognition server 200 transmits the control information corresponding to the adjusted "smart gimbap" to the voice recognition apparatus 100. Upon receiving the voice recognition result, the voice recognition apparatus 100 selects a link of "smart gimbap" and displays a concerned web page.

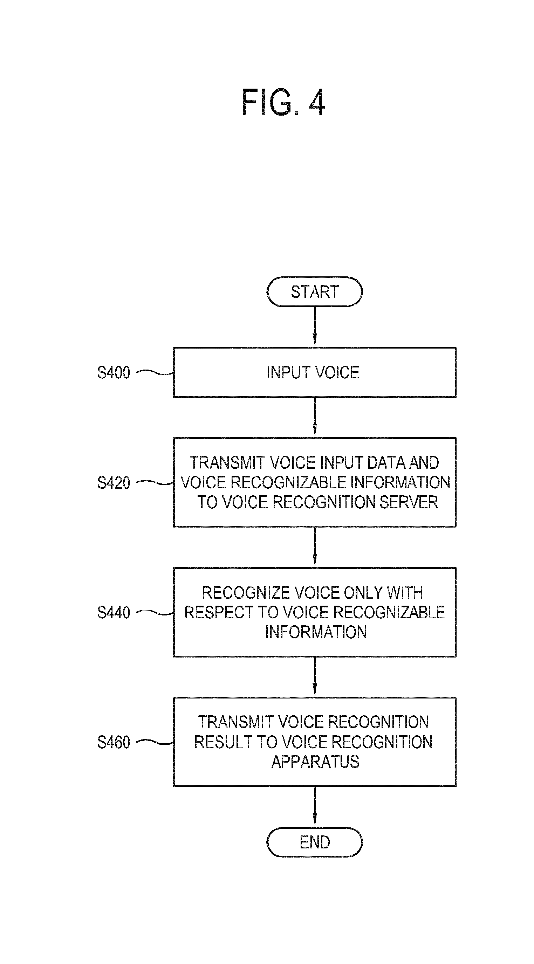

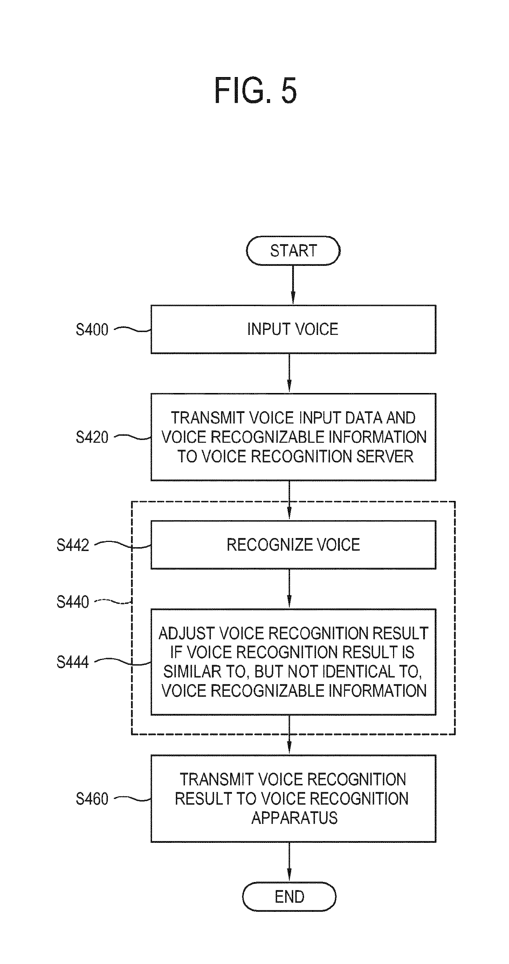

FIG. 4 is a flowchart of a voice recognition method according to an exemplary embodiment. FIG. 5 is a flowchart of a voice recognition method according to an exemplary embodiment.

Referring to FIGS. 4 and 5, the voice recognition apparatus 100 receives a voice input from a user (S400). The voice recognition apparatus 100 transmits voice input data and voice recognizable information to the voice recognition server 200 (S420). The voice recognizable information may include a plurality of words stored in the voice recognition apparatus 100 in advance, or text information of a web page or a menu displayed in a screen when a voice input is received from a user. The voice recognizable information may further include an image of a web page or a name of an image or link information of the web page. Upon receiving the voice input data and voice recognizable information, the voice recognition server 200 recognizes the voice input data with respect to only the voice recognizable information (S440). More specifically, the voice recognition is performed by using the voice input data (S442). If the voice recognition result is similar to, but not identical to, the voice recognizable information, the voice recognition result is adjusted to be recognized as the most similar voice recognizable information (S444). Detailed exemplary embodiment is shown in FIG. 1, and description will be omitted. The voice recognition result is transmitted to the voice recognition apparatus 100 (S460), and the voice recognition apparatus 100 receives the recognition result for operation.

Accordingly, the general-purpose voice recognition engine, which is not limited in recognizing words, may accurately recognize a limited number of words used in a specific area.

As described above, a voice recognition apparatus, a voice recognition server, a voice recognition system and a voice recognition method may accurately recognize a limited number of words used in a specific area with a general-purpose voice recognition engine, which is not limited in recognizing words.

Although a few exemplary embodiments have been shown and described, it will be appreciated by those skilled in the art that changes may be made in these exemplary embodiments without departing from the principles of the invention, the range of which is defined in the appended claims.

## Claims

1. A voice recognition apparatus comprising:
a voice input unit which receives a voice input from a user;
an image processor which processes an image;
a display unit which displays thereon an image processing result; and
a controller which transmits the data of the voice input and voice recognizable information to a voice recognition engine, and receives from the voice recognition engine a recognition result that indicates whether the data of the voice input corresponds to the voice recognizable information.

2. The voice recognition apparatus according to claim 1, wherein the voice recognizable information comprises text information.

3. The voice recognition apparatus according to claim 1, wherein the voice recognizable information comprises a plurality of words subject to voice recognition.

4. The voice recognition apparatus according to claim 1, wherein the voice recognizable information comprises an image or a name of an image.

5. The voice recognition apparatus according to claim 1, wherein the voice recognizable information comprises link information or a menu item of a web page.

6. The voice recognition apparatus according to claim 1, wherein the voice recognition information comprises a text comprising at least one word of a web page or a menu displayed when the voice input is received.

7. The voice recognition apparatus according to claim 1, wherein the voice recognition engine operates in a device mounted in the voice recognition apparatus.

8. The voice recognition apparatus according to claim 1, wherein the voice recognition engine operates in a device mounted in a voice recognition server external to the voice recognition apparatus.

9. A voice recognition method comprising:
receiving a voice input by a voice recognition apparatus;
transmitting data of the voice input and voice recognizable information to a voice recognition server;
determining whether the data of the voice input corresponds to the voice recognizable information; and
transmitting to the voice recognition apparatus a voice recognition result that indicates whether the data of the voice input corresponds to the voice recognizable information.

10. The voice recognition method according to claim 9, wherein the voice recognizable information comprises text information.

11. The voice recognition method according to claim 9, wherein the voice recognizable information comprises a plurality of words subject to voice recognition.

12. The voice recognition method according to claim 9, wherein the voice recognizable information comprises an image or a name of an image.

13. The voice recognition method according to claim 9, wherein the voice recognizable information comprises link information or a menu item of a web page.

14. The voice recognition method according to claim 9, wherein the voice recognizable information comprises a text comprising at least one word of a web page or a menu displayed when the voice input is received.
